# EUROPÄISCHE PATENTSCHRIFT

(11) **EP 1 185 842 B1**
(45) Veröffentlichungstag und Bekanntmachung des Hinweises auf die Patenterteilung: **24.09.2003**
(21) Anmeldenummer: 00907401.4
(22) Anmeldetag: 13.03.2000
(51) Int. Cl.: G01C 5/06

(54) **AUTOMATISCHE HÖHENEINSTELLUNG IN EINEM HÖHENMESSER**
AUTOMATIC HEIGHT ADJUSTMENT IN AN ALTIMETER
REGLAGE AUTOMATIQUE DE HAUTEUR DANS UN DISPOSITIF DE MESURE DE HAUTEUR

(30) Priorität: 11.06.1999 CH 109099
(43) Veröffentlichungstag der Anmeldung: 13.03.2002
(73) Patentinhaber: Flytec AG, 6048 Horw (CH)
(72) Erfinder: JODER, Peter, CH-6010 Kriens (CH); CAMENZIND, Lorenz, CH-6004 Luzern (CH)
(74) Vertreter: Troesch Scheidegger Werner AG
(86) Internationale Anmeldenummer: CH0000143
(87) Internationale Veröffentlichungsnummer: WO00077473

(56) Entgegenhaltungen:
- DE-A- 4 236 357

## Beschreibung

Die vorliegende Erfindung betrifft eine Vorrichtung zum Erfassen und Anzeigen der Höhe eines Standortes über Meeresspiegel durch Messen des Umgebungsluftdruckes sowie ein Verfahren zum automatischen Korrigieren der Höheneinstellung an einer Vorrichtung zum Messen der Höhe über Meeresspiegel mittels Erfassen des Umgebungsluftdruckes.

Der Luftdruck oder die Höhenmessung bei einem entsprechenden beispielsweise elektronischen Messgerät erfolgt über einen Druckmessensor. Dieser Sensor funktioniert auf mechanischer Basis, in dem sich eine Membrane im Innern des Gehäuses bei Druckänderungen leicht biegt. Diese Veränderung wird gemessen und elektronisch gewandelt aufbereitet. Jede Druckmessung und daraus abgeleitet die Höhenmessung erfolgt nach diesem mechanischen Prinzip.

Ein Höhenmesser berechnet die Höhe aufgrund des Luftdruckes. Dabei wird der Luftdruck auf Meereshöhe als Nullpunkt-Druck angenommen. Dieser Nullpunkt-Druck wird als QNH bezeichnet. Wird also auf einer bestimmten Höhe ein Luftdruck gemessen, so wird dieser anhand einer Eichkurve, ermittelt durch durchschnittliche Luftdrücke an jeweiligen Höhenstandorten, abgeleitet. Aufgrund des sich stets verändernden Luftdruckes bei unterschiedlicher Wetterlage bei gleichbleibendem Standort können sich ableitend Höhenmesswertdifferenzen ergeben. Pro 1 mbar Druckveränderung beträgt diese Abweichung ca. 8 m. Wetter bedingt schwankt der mittlere Luftdruck beispielsweise auf einer Meereshöhe von ca. 1013 mbar von zwischen 950 und 1050 mbar. Mit anderen Worten kann eine Messung auf Meereshöhe Höhenwertschwankungen in der Grössenordnung von ca. 1000 m ergeben.

Selbst an einem stabilen Tag können temperaturbedingte Luftdruckschwankungen von +/-1 mbar auftreten. Bei schnellen Wetteränderungen, z.B. Kaltfronten, kann sich der Luftdruck innerhalb eines Tages um bis zu 5 mbar ändern, die Höhenabweichung beträgt somit ca. 40 m.

Bedingt durch diese Luftdruckschwankungen muss ein Höhenmesser, will man eine korrekte Anzeige haben, vor jedem Gebrauch neu justiert werden. Das heisst der Höhenmesser muss auf einer bekannten Höhe, wie z.B. zu Hause, bei einer Bahnstation, einer Hütte, usw. neu eingestellt werden, was leicht vergessen wird. Häufig werden Höhenmesser aus eben diesem Grunde gar nicht mehr verwendet, da sie als ungenau bzw. unzuverlässig gelten, indem grössere Druckschwankungen des Luftdruckes zu ungenauen Höhenangaben führen können.

Es ist daher eine Aufgabe der vorliegenden Erfindung, eine Höhenmessvorrichtung zu schaffen, welche eine bessere Messgenauigkeit mit sich bringt und welche benutzerfreundlicher ist.

Erfindungsgemäss wird die gestellte Aufgabe mittels einer Vorrichtung gemäss dem Wortlaut nach Anspruch 1 bzw. mittels eines Verfahrens gemäss dem Wortlaut nach Anspruch 10 gelöst. Der Grundgedanke der vorliegenden Erfindung liegt darin, dass eine Höhenmessvorrichtung vorgesehen ist, welche eine automatische oder halbautomatische Einstellung einer oder mehrerer beliebigen Höhenangaben ermöglicht.

Insbesondere wird eine Vorrichtung zum Erfassen und Anzeigen der Höhe eines Standortes über Meeresspiegel durch Messen des Umgebungsluftdruckes vorgeschlagen, wobei ein Einstell- bzw. Rückstellmechanismus vorgesehen ist, um die Vorrichtung auf eine bestimmte gespeicherte Höheneinstellung in einem bestimmten Zeitpunkt ein- bzw. zurückzustellen, falls der zu diesem bestimmten Zeitpunkt gemessene Luftdruck eine Höhe ergibt, welche innerhalb einer voreingegebenen Toleranzgrenze mit der bestimmten gespeicherten Höheneinstellung übereinstimmt.

Mit anderen Worten kann eine bestimmte Höhenangabe eingestellt und abgespeichert werden, womit diese Höhenangabe respektive der damit verbundene Umgebungsluftdruck in einem Speicher bzw. Memory abgelegt ist. Wird der Standort nicht verändert, merkt dies die Höhenmessvorrichtung insofern, indem der gemessene Umgebungsluftdruck resp. der der Höhe dieses Standortes entsprechende Luftdruck nur innerhalb eines bestimmten Toleranzwertes variieren kann, womit zu jedem Zeitpunkt die Höhenmessvorrichtung auf die gespeicherte Höheneinstellung automatisch rückstellbar ist. Der Zeitpunkt, wann diese Einstellung bzw. Rückstellung erfolgen soll, kann beliebig definiert werden. Dies kann innerhalb eines gewissen Zeitintervalles sein oder es kann ab Speicherung beispielsweise innerhalb eines Tages sein. Der Zeitpunkt bzw. der Zeitintervall, wann die Rückstellung zu erfolgen hat, kann sogar vom Benützer definiert werden.

So ist es beispielsweise möglich, dass jeweils morgens um 5 h, wenn eine Benutzerperson des Höhenmessers in der Regel noch im Bett ist, die automatische Erfassung des Umgebungsluftdruckes erfolgt und die automatische Rückstellung auf den voreingegebenen Höhenwert, falls der dannzumal um 5 h morgens erfasste Umgebungsluftdruck innerhalb eines Toleranzintervalles mit demjenigen Luftdruck übereinstimmt, welcher dem gespeicherten Höhenwert entspricht. Auf diese Art und Weise werden Druckschwankungen des Umgebungsluftdruckes automatisch ausgeglichen, und somit beträgt die Ausgangshöhe der Höhenmessvorrichtung jeweils immer morgens um 5 h denselben Wert, unabhängig davon, ob der Standort der Benutzerperson, wie beispielsweise seine Wohnung oder sein Haus, im Bereich eines Hochs oder eines Tiefs ist. Da tägliche Schwankungen des Luftdruckes in der Regel nur wenige Millibar betragen und grössere Druckschwankungen erst über eine Periode von mehreren Tagen erfolgen, ergibt sich somit immer eine relativ gute Genauigkeit der Höhenmessung, und zudem muss die die Höhenmessvorrichtung benutzende Person sich nie daran erinnern, die Höhenmessvorrichtung ein- bzw. zurückzustellen bzw. auf die Ausgangshöhe einzustellen.

Die automatische Speicherung der Ausgangshöhe resp. des entsprechenden Druckes kann auch aufgrund einer Selbstlernerkennung erfolgen. Das heisst, dass ein integrierter Mikroprozessor die Gewohnheiten des Benutzers erkennt und diese automatisch adapiert. Zum Beispiel wohnt der Benutzer auf einer gewissen Höhe und hat den Höhenmesser immer am gleichen Ort stehen, Oder der Benutzer hat den Höhenmesser im Auto und fährt jeden Morgen beispielsweise immer um 8 h zur Arbeit, so kann der Mikroprozessor erkennen, dass um 8 h morgens die Höhe bzw. der gemessene Umgebungsluftdruck nicht gleich ist, wie später am Tag, wenn das Auto vor dem Büro bzw. dem Geschäft des Benutzers steht. Somit sind auch im Verlaufe eines Tagesablaufes mehrere automatische Ein- bzw. Rückstellungen möglich, indem zunächst die Höhenmessvorrichtung eine Ein- bzw. Rückstellung um 8 h morgens automatisch vornimmt auf die Höhe beispielsweise des Autos vor dem Wegfahren ins Büro. Später am Tage, beispielsweise um 14 h nachmittags, erfolgt eine erneute Ein- bzw. Rückstellung auf die Höhe des Parkplatzes, wo die Benutzerperson ihren Wagen während der Arbeit stehen hat. Selbstverständlich erfolgt diese automatische Ein- bzw. Rückstellung immer nur dann, wenn der jeweils gemessene Luftdruck innerhalb einer Toleranzgrenze liegt, welche dem jeweiligen Luftdruck des entsprechenden Standortes entspricht. Auch das automatische Erfassen, Speichern und Adaptieren ist jeweils nur dann möglich, wenn zu bestimmten gleichen Zeitpunkten des Tages der jeweils gemessene Luftdruck innerhalb von Toleranzgrenzen liegt.

Auch weitere Gewohnheiten können erkannt und adaptiert werden, wie z.B. das allsonntägliche späte Aufstehen, das jeweils frühe Aufstehen in den Ferien bei Bergtouren, etc.

Nebst dem Erfassen von Luftdruck und der damit verbundenen Höhe ist es auch möglich, weitere Parameter einzugeben und zu speichern und mit den jeweiligen gespeicherten Höhenangaben zu verbinden bzw. zu kombinieren, wie beispielsweise Uhrzeit, Datum, geographischer Standort, Angaben wie Ferien oder Arbeit, etc..

Nebst dieser automatischen Erfassung und Abspeicherung bzw. Ein- oder Rückstellung soll es selbstverständlich auch möglich sein, manuell Abspeicherungen vorzunehmen bzw. manuell die Einoder Rückstellung vorzunehmen und mittels Menuschaltung weitere Funktionen in der Höhenmessvorrichtung abzurufen bzw. zu verwenden.

Schlussendlich soll es auch möglich sein, den ganzen Rückstellmechanismus auszuschalten und die Höhenmessvorrichtung manuell zu verwenden, wie dies bei herkömmlichen Höhenmessvorrichtungen der Fall ist.

Durch die erfindungsgemäss vorgeschlagene Vorrichtung wird es für eine Benutzerperson natürlich attraktiver, Höhenmessungen vorzunehmen bzw. sich die Höhe des jeweiligen Standortes anzeigen zu lassen, weshalb mit einem vermehrten Einsatz bzw. mit der vermehrten Verwendung derartiger Höhenmessgeräte zu rechnen ist. Da eine Benutzerperson aber nicht mehrere Gerätschaften mit sich tragen möchte, ist es sinnvoll, eine erfindungsgemässe Höhenmessvorrichtung beispielsweise in einer Uhr, wie einer Armbanduhr, Taschenuhr oder in einem Taschenmesser, etc. integriert anzuordnen. Auch eignet sich die erfindungsgemässe Höhenmessvorrichtung als Mess- und Anzeigeanordnung in einem Automobil, integriert im Armaturenbrett.

Erfindungsgemässe Höhenmessvorrichtungen können sowohl eine wie mehrere Anzeigen, wie beispielsweise sogenannte LCD-Displays, aufweisen einerseits für die Angabe des gemessenen Luftdruckes und/oder der daraus ermittelten Höhe über Meeresspiegel, sowie Angabe von Zeit, Standort etc.. Weiter ist es möglich, Eingabetastaturen vorzusehen, um beispielsweise geographische Angaben in die Vorrichtung einzugeben und kombiniert mit gemessenen Höhenangaben abzuspeichern.

Die oben angeführten Ausführungsvarianten der erfindungsgemäss vorgeschlagenen Höhenmessvorrichtung stellen lediglich Beispiele dar, in welcher Art und Weise die Höhenmessvorrichtung abgeändert bzw. modifiziert werden kann. Grundsätzlich ist es möglich, weitere Mess- und Anzeigevorrichtungen in der Höhenmessvorrichtung vorzusehen oder die Höhenmessvorrichtung mit anderen Geräten zu kombinieren. Den Variations-, Kombinations- und Modifikationsmöglichkeiten sind im Rahmen der in den Patentansprüchen definierten Erfindung keine Grenzen gesetzt.

## Patentansprüche

1. Vorrichtung zum Erfassen und Anzeigen eines Standortes über Meeresspiegel durch Messen des Umgebungsluftdruckes, **dadurch gekennzeichnet, dass** ein Einstell- bzw. Rückstellmechanismus vorgsehen ist, um die Vorrichtung auf eine bestimmte gespeicherte Höheneinstellung in einem bestimmten Zeitpunkt ein- bzw. zurückzustellen, falls der zu diesem bestimmten Zeitpunkt gemessene Luftdruck eine Höhe ergibt, welche innerhalb einer voreingegebenen Toleranzgrenze mit der bestimmten gespeicherten Höheneinstellung übereinstimmt.

2. Vorrichtung, insbesondere nach Anspruch 1, **dadurch gekennzeichnet, dass** der Rückstellmechanismus mit einer Zeiterfassungseinheit derart gekoppelt ist, dass die Ein- bzw. Rückstellung periodisch und/oder immer zur selben Tages- oder Wochenzeit erfolgt.

3. Vorrichtung, insbesondere nach einem der Ansprüche 1 oder 2, **dadurch gekennzeichnet, dass** ein automatisches bzw. selbsterkennendes Höhenerfassungs- und Abspeicherungsorgan vorgesehen ist, welches bei periodischem und/oder täglichem und/oder wöchentlichem Messen einer gleichen Höhe bzw. eines Luftdruckes innerhalb einer vorgegebenen Toleranzgrenze zum jeweils gleichen Zeitpunkt bzw. innerhalb des gleichen Zeitintervalles diesen Wert abspeichert und anschliessend die Vorrichtung in diesem Zeitpunkt bzw. Zeitintervall des Messens automatisch die Vorrichtung auf den vorab gemessenen Höhenwert ein- bzw. zurückgestellt wird.

4. Vorrichtung, insbesondere nach einem der Ansprüche 1 - 3, **dadurch gekennzeichnet, dass** mehrere vorbestimmte Höheneinstellungen abgespeichert sind, wobei jeweils mindestens eine bestimmte Höheneinstellung auswählbar ist, auf welche die Vorrichtung zu einem bestimmten Zeitpunkt bzw. periodisch ein- bzw. rückstellbar ist.

5. Vorrichtung, insbesondere nach einem der Ansprüche 1 - 4, **dadurch gekennzeichnet, dass** ein Speicherorgan vorgesehen ist, um manuell und/oder automatisch mehrere gemessene Luftdruck- bzw. damit verbundene Höhenmesswerte abzuspeichern, wobei die gespeicherten Werte koppelbar sind mit weiteren Angaben wie Zeitpunkt des Messens, Standort des Messens.

6. Vorrichtung, insbesondere nach einem der Ansprüche 1 - 5, **dadurch gekennzeichnet, dass** eine Menuschaltung vorgesehen ist, mittels welcher die Vorrichtung zwischen verschiedenen Erfassungs- bzw. Betriebsarten wechselbar schaltbar ist und/oder mittels welcher zwischen verschiedenen Anzeigearten bzw. Anzeigedaten gewählt werden kann.

7. Vorrichtung, insbesondere nach einem der Ansprüche 1 - 6, **dadurch gekennzeichnet, dass** eine oder mehrere LCD-Displays vorgesehen sind für die Anzeige der Höhe, Zeit, Datum, geographischer Standort.

8. Vorrichtung, insbesondere nach einem der Ansprüche 1 - 7, **dadurch gekennzeichnet, dass** eine Eingabetastatur vorgesehen ist für die Eingabe von Daten, geographischen Angaben, Koordinaten.

9. Vorrichtung, insbesondere nach einem der Ansprüche 1 - 8, **dadurch gekennzeichnet, dass** sie integral in einer Uhr, wie einer Armbanduhr oder Taschenuhr, integral in einem Taschenmesser oder einem anderen Werkzeug des täglichen Gebrauches angeordnet ist.

10. Verfahren zum automatischen Korrigieren der Höheneinstellung an einer Vorrichtung zum Messen der Höhe eines Standortes über Meeresspiegel mittels Erfassen des Umgebungsluftdruckes, **dadurch gekennzeichnet, dass** die für das weitere Erfassen der Standorthöhe bzw. des Umgebungsluftdruckes massgebende Ausgangshöheneinstellung der Vorrichtung in einem bestimmten Zeitpunkt auf einen bestimmten gespeicherten Höhenwert ein- bzw. zurückgestellt wird, falls der zu diesem Zeitpunkt gemessene Luftdruck innerhalb einer voreingegebenen Toleranzgrenze mit dem dem gespeicherten Höhenwert entsprechenden und ebenfalls abgespeicherten Luftdruckmesswert übereinstimmt.

11. Verfahren, insbesondere nach Anspruch 10, **dadurch gekennzeichnet, dass** die Rückstellung jeweils täglich und/oder wöchentlich immer zum selben Zeitpunkt und/oder periodisch erfolgt, falls der dannzumal gemessene Wert innerhalb der Toleranzgrenze liegt.

12. Verfahren, insbesondere nach einem der Ansprüche 10 oder 11, **dadurch gekennzeichnet, dass** Gewohnheiten einer die Vorrichtung benutzenden Person automatisch erfasst und adaptiert werden, indem gleiche Werte des erfassten Luftdruckes bzw. der Höhe innerhalb von Toleranzgrenzen zu jeweils gleichen Tagesund Wochenzeiten bzw. zu gleichen periodischen Zeitpunkten gespeichert und anschliessend für die automatische Ein- bzw. Rückstellung verwendet werden.

## Claims

1. Device for detecting and displaying the elevation of a location above sea level by measuring the ambient air pressure, **characterised in that** an adjustment or reset mechanism is provided in order to set or reset the device to a particular stored elevation setting at a particular time if the air pressure measured at this particular time gives an elevation which corresponds within a preset tolerance limit to the particular stored elevation setting.

2. Device in particular according to claim 1, **characterised in that** the reset mechanism is coupled with a time detection unit such that the setting or resetting takes place periodically and/or always at the same time of day or week.

3. Device in particular according to one of claims 1 or 2, **characterised in that** an automatic or self-detecting elevation detection and storage element is provided which on periodic and/or daily and/or weekly measurement of the same elevation or air pressure within a preset tolerance limit, always at the same time or within the same time interval, stores this value and then within this time or time interval of measurement, the device is automatically reset to the previously measured elevation value.

4. Device in particular according to any of claims 1 to 3, **characterised in that** several predetermined elevation settings are stored where in each case at least one particular elevation setting can be selected to which the device can be set or reset at a particular time or periodically.

5. Device in particular according to any of claims 1 to 4, **characterised in that** a storage element is provided in order to store several air pressures or associated elevation measurement values measured manually and/or automatically, where the stored values can be coupled to further data such as the time of measurement, location of measurement.

6. Device in particular according to any of claims 1 to 5, **characterised in that** a menu circuit is provided by means of which the device can be switched alternately between different detection and operating modes and/or by means of which a selection can be made between different display types or display data.

7. Device in particular according to any of claims 1 to 6, **characterised in that** one or more LCD displays are provided for displaying the elevation, time, data, geographical location.

8. Device in particular according to any of claims 1 to 7, **characterised in that** an input keypad is provided for the input of data, geographical data, co-ordinates.

9. Device in particular according to any of claims 1 to 8, **characterised in that** it is arranged integrally in a watch, e.g. a wrist-watch or pocket watch, in a pocket knife or other tool in daily use.

10. Device for automatic correction of the elevation setting on a device for measuring the elevation of a location above sea level by means of detection of the ambient air pressure, **characterised in that** the starting height setting of the device which is decisive for further detection of the location height or ambient air pressure is set or reset at a particular time to a particular stored elevation value if the air pressure measured at this time corresponds within a preset tolerance limit to the stored air pressure measurement value corresponding to the stored elevation value.

11. Process in particular according to claim 10, **characterised in that** the reset takes place daily and/or weekly always at the same time and/or periodically if the value measured at the time lies within the tolerance limit.

12. Process in particular according to any of claims 10 or 11, **characterised in that** the habits of a person using the device are detected and adapted automatically as the same values of the air pressure or elevation detected within tolerance limits at the same times of day and week or at the same periodic times are stored and then used for automatic setting or resetting.

## Revendications

1. Dispositif pour détecter et afficher l'altitude d'une position par rapport au niveau de la mer grâce à une mesure de la pression atmosphérique ambiante, **caractérisé en ce qu'**il est prévu un mécanisme de réglage ou de remise à l'état initial pour régler ou ramener le dispositif, à un moment donné, à un réglage d'altitude défini mémorisé, au cas où la pression atmosphérique mesurée à ce moment-là donne une altitude qui coïncide à l'intérieur d'une limite de tolérance entrée préalablement avec le réglage d'altitude défini mémorisé.

2. Dispositif, en particulier selon la revendication 1, **caractérisé en ce que** le mécanisme de remise à l'état initial accouplé à une unité d'enregistrement de temps de telle sorte que le réglage ou la remise à l'état initial a lieu périodiquement et/ou toujours au même moment de la journée ou de la semaine.

3. Dispositif, en particulier selon la revendication 1 ou 2, **caractérisé en ce qu'**il est prévu un organe automatique ou autodétecteur de détection et de mémorisation de l'altitude qui, lors d'une mesure périodique et/ou quotidienne et/ou hebdomadaire d'une même altitude ou d'une pression atmosphérique à l'intérieur d'une limite de tolérance prédéfinie, au même moment ou à l'intérieur du même intervalle de temps, mémorise cette valeur puis, à ce moment-là ou pendant cet intervalle de temps de la mesure, règle ou ramène automatiquement le dispositif à la valeur d'altitude mesurée précédemment.

4. Dispositif, en particulier selon l'une des revendications 1 à 3, **caractérisé en ce que** plusieurs réglages d'altitude prédéfinis sont mémorisés, étant précisé qu'on peut sélectionner à chaque fois au moins un réglage d'altitude défini auquel le dispositif peut être réglé ou ramené à un moment donné ou périodiquement.

5. Dispositif, en particulier selon l'une des revendications 1 à 4, **caractérisé en ce qu'**il est prévu un organe de mémorisation pour mémoriser manuellement et/ou automatiquement plusieurs valeurs de pression atmosphérique mesurées ou des valeurs de mesure d'altitude liées à celles-ci, les valeurs mémorisées pouvant être couplées à d'autres indications telles que le moment de la mesure, la position de la mesure.

6. Dispositif, en particulier selon l'une des revendications 1 à 5, **caractérisé en ce qu'**il est prévu une commande par menu grâce à laquelle le dispositif peut passer alternativement d'un mode de détection ou de fonctionnement à un autre, et/ou grâce à laquelle on peut choisir entre différents types ou données d'affichage.

7. Dispositif, en particulier selon l'une des revendications 1 à 6, **caractérisé en ce qu'**il est prévu un ou plusieurs affichages à cristaux liquides pour afficher l'altitude, l'heure, la date, la position géographique.

8. Dispositif, en particulier selon l'une des revendications 1 à 7, **caractérisé en ce qu'**il est prévu un clavier d'entrée pour entrer des dates, des indications géographiques, des coordonnées.

9. Dispositif, en particulier selon l'une des revendications 1 à 8, **caractérisé en ce qu'**il est intégré dans une montre telle qu'une montre-bracelet ou une montre de poche, dans un couteau de poche ou dans un autre outil d'usage quotidien.

10. Procédé pour corriger automatiquement le réglage d'altitude dans un dispositif pour mesurer l'altitude d'une position par rapport au niveau de la mer grâce à la détection de la pression atmosphérique ambiante, **caractérisé en ce que** le réglage d'altitude initial du dispositif qui est déterminant pour la détection ultérieure de l'altitude de la position ou de la pression atmosphérique ambiante est réglé ou ramené, à un moment donné, à une valeur d'altitude définie mémorisée, au cas où la pression atmosphérique mesurée à ce moment-là coïncide, à l'intérieur d'une limite de tolérance entrée préalablement, avec la valeur de mesure de pression atmosphérique qui correspond à la valeur d'altitude mémorisée et qui est également mémorisée.

11. Procédé, en particulier selon la revendication 10, **caractérisé en ce que** la remise à l'état initial a lieu tous les jours et/ou toutes les semaines toujours au même moment et/ou périodiquement, au cas où la valeur alors mesurée est située à l'intérieur de la limite de tolérance.

12. Procédé, en particulier selon la revendication 10 ou 11, **caractérisé en ce que** les habitudes d'une personne qui utilise le dispositif sont automatiquement détectées et adaptées, les valeurs identiques de la pression atmosphérique détectée ou de l'altitude, à l'intérieur de limites de tolérance, étant mémorisées aux mêmes moments de la journée et de la semaine ou aux mêmes moments périodiques, puis utilisées pour le réglage ou la remise à l'état initial automatique.
